# EUROPÄISCHE PATENTANMELDUNG

(11) **EP 2 163 150 A2**
(43) Veröffentlichungstag der Anmeldung: **17.03.2010**
(21) Anmeldenummer: 09161651.6
(22) Anmeldetag: 02.06.2009
(51) Int. Cl.: A01F 29/10, A01D 43/08

(54) **Einzugsvorrichtung für einen Feldhäcksler**

(30) Priorität: 27.08.2008 DE 102008039863
(71) Anmelder: CLAAS Selbstfahrende Erntemaschinen GmbH, 33426 Harsewinkel (DE)
(72) Erfinder: Altepost, Helmut, 48477, Hörstel-Riesenbeck (DE); Rauch, Hans, 88348, Bad Saulgau (DE)

(57) **Zusammenfassung**

Einzugsvorrichtung (6) für einen Feldhäcksler (1) mit wenigstens einer unteren drehbaren Einzugswalze (19) und wenigstens einer oberen drehbaren Einzugswalze (28) zwischen denen ein Erntegutstrom hindurchführbar ist und die wenigstens eine obere Einzugswalze (28) im Betrieb mittels wenigstens einer Verstelleinrichtung (31) nach unten in Richtung auf die wenigstens eine untere Einzugswalze (19) gedrückt wird, wobei die wenigstens eine Verstellelnrichtung (31) derart ausgebildet ist, dass der Anpressdruck auf den Erntegutstrom mit zunehmenden Abstand der wenigstens einen oberen Einzugswalze zur wenigstens einen unteren Einzugswalze (19) progressiv ansteigt.

## Beschreibung

Die Erfindung betrifft eine Einzugsvorrichtung für einen Feldhäcksler nach dem Oberbegriff des Anspruchs 1.

Aus dem Stand der Technik ist es bekannt, die an Schwingen gelagerten höhenbeweglichen oberen Einzugswalzen im Betrieb durch eine oder mehrere Federn nach unten in Richtung auf die unteren Einzugswalzen zu drücken. Eine beispielhafte Ausführung ist in EP0519209 gezeigt. Wenn Erntegut in die Einzugsvorrichtung gelangt, werden die oberen Einzugswalzen entgegen der Federwirkung nach oben angehoben. Die Höhe der Anhebung hängt dabei von der Dicke des zugeführten Erntegutpolsters ab. Die Federn sind einerseits möglichst stark ausgelegt, um durch eine hohe Vorpressung des Erntegutes eine möglichst homogene Erntegutmatte zu erzeugen. Andererseits ist eine zu hohe Federspannung nachteilig, da ansonsten die Förderwirkung durch die Einzugswalzen beschränkt wäre. Die gewählte Federspannung stellt somit einen Kompromiss dar zwischen einer möglichst hohen Vorpressung und einer möglichst hohen Fördersicherheit.

Als nachteilig ist anzusehen, dass die ausgeübte Vorpresskraft bei der Verwendung von Federn aufgrund ihrer mechanischen Eigenschaft abhängig von der Höhe der Erntegutmatte ist. Bei geringen Mattenhöhen, wie beispielsweise beim Ein- und Ausfahren aus dem Erntegutbestand kommt es aufgrund der dann geringeren Vorpresskraft der Vorpresswalzen zu einem ungleichmäßigen Schnitt und unterschiedlicher Schnittlänge des Erntegutes. Aufgrund des Kompromisses zwischen Federkraft und Fördersicherheit wird zudem nicht unter allen Einsatzbedingungen eine optimale Vorpressung des Erntegutes erreicht.

In der DE 195 39 143 A ist eine hydraulische Erzeugung des Anpressdrucks der oberen Vorpresswalzen vorgeschlagen, Ein doppelt wirkender Hydraulikzylinder übt Druck auf eine oder mehrere Einzugswalzen aus, wobei der Arbeitsdruck mittels Sensoren ermittelt und von Auswerteelektronik mit einem Solldruckwert verglichen wird, welche bei Differenzen eine mit dem Hydraulikzylinder verbundene Ventilanordnung ansteuert, um eine entsprechende Druckanpassung zu erreichen, Solange sich die Höhe der Erntegutmatte nicht sprunghaft ändert, bleibt der Anpressdruck der Vorpresswalzen konstant. Bei sprunghaften Veränderungen allerdings kann aufgrund der Trägheit des Hydraulikzylinders eine schnelle Nachführung der Vorpresswalzen nicht erfolgen, so dass einerseits unerwünschte Überlangen bei sich schnell reduzierenden Mattenhöhen auftreten können und andererseits es bei sich schnell erhöhenden Mattenhöhen zu Aufstauungen kommen kann,

Aus der DE 10 2005 055 983 A ist eine Zuführeinrichtung für einen Feldhäcksler bekannt geworden, bei der eine der oberen Vorpresswalzen mittels eines Hydraulikzylinders gegen die untere Vorpresswalze bewegbar ist. Zur Erzeugung einer Vorspannung ist zwischen dem Hydraulikzylinder und der oberen Vorpresswalze zusätzlich ein Feder angeordnet. Hier können zwar bei sprunghaften Änderungen der Erntegutmattenhöhe eine schnellere Anpassung des Anpressdrucks der Vorpresswalzen erfolgen. Nachteilig ist jedoch, dass der Anpressdruck von den Vorpresswalzen mit wachsendem Erntegutdurchsatz, nur monoton ansteigt, welches insbesondere bei der Bewältigung von großen Erntegutdurchsätzen nachteilig ist.

Der vorliegenden Erfindung liegt daher die Aufgabe zugrunde, die im Stand der Technik beschriebenen Nachteile zu vermeiden und insbesondere eine verbesserte Einzugsvorrichtung für einen Feldhäcksler vorzuschlagen, die eine gewünschte Vorpressung realisiert und die den Anpressdruck mit steigendem Erntegutdurchsatz progressiv ansteigen lässt.

Dieses Problem wird erfindungsgemäß durch die Lehre des Patentanspruchs 1 gelöst, wobei in den weiteren Patentansprüche Merkmale aufgeführt sind, die die Lösung in vorteilhafter Weise weiterentwickeln.

Indem die wenigstens eine Verstelleinrichtung derart ausgebildet ist, dass der Anpressdruck auf den Erntegutstrom mit zunehmenden Abstand der wenigstens einen oberen Walze zur wenigstens einen unteren Walze progressiv ansteigt, ist vorteilhaft sichergestellt, dass insbesondere bei sich schnell erhöhenden Erntegutmatten eine in der Presskraft erhöhte Vorpressung gewährleistet ist.

Es wird vorgeschlagen, dass die wenigstens eine Verstelleinrichtung ein fremdkraftbetätigtes Druckelement umfasst, dessen einen Endes an der Einzugsvorrichtung drehbar gelagert ist und anderen Endes ein Federelement aufnimmt, das am gegenüberliegenden Ende ein mit den Einzugswalzen in Wirkverbindung stehendes Koppelelement aufnimmt. Insbesondere durch das Zwischenschalten des Koppelementes kann beim Abheben der oberen Einzugswalze von der unteren Einzugswalze ein progressiv ansteigender Anpressdruck erreicht werden. Vorteilhaft ermöglicht das zwischen dem fremdkraftbetätigten Druckelement und dem Koppelelement angeordnete Federelement, den Einzugswalzen, unabhängig von Trägheitsmomenten des fremdkraftbetätigten Druckelementes schnellen und/oder sprunghaften Änderungen der Erntegutmatte unmittelbar zu folgen, so dass vorteilhaft auch bei geringem Erntegutdurchsatz durch die Vorspannkraft der Feder ein ausreichender Anpressdruck erreicht werden kann. Vorzugsweise ist das Federelement eine Zugfeder, deren wirkende Kraft mit wachsender Ausdehnung linear ansteigt. Vorzugsweise ist das fremdkraftbetätigte Druckelement ein Hydraulikzylinder, wobei durch Ein- und Ausfahren dessen Kolbenstange die Vorspannkraft der Feder vorteilhaft variierbar ist,

Eine konstruktiv einfache Realisierung der Erfindung ist gegeben, wenn das Koppelelement zwei Koppelglieder umfasst, deren erste Enden in einem Drehpunkt mit dem Federelement drehbar gelagert verbunden sind und das zweite Ende des ersten Koppelgliedes am Drehpunkt der oberen Einzugswalze und das zweite Ende des zweiten Koppelgliedes am Drehpunkt der unteren Einzugswalze gelagert ist. Die Auslenkung der oberen Einzugswalze bedingt ein lineares ansteigen der Federkraft des in der Regel vorgespannten Federelementes, das vorteilhaft an die wenigstens zwei Koppelglieder die mit der oberen bzw. unteren Einzugswalze in Verbindung stehen, angreift und durch Veränderung der Winkellage der beiden Koppelglieder ein progressives Ansteigen des Anpressdruckes mit zunehmenden Erntegutdurchsatz bewirkt.

In einer vorteilhaften Weiterbildung der Erfindung ist das wenigstens eine fremdkraftbetätigte Druckelement ein Hydraulikzylinder und/oder ein elektrischer oder elektronischer Stellantrieb ist, so dass auf einfache Weise die Vorspannkraft des Federelementes und die Progression der Anpresskraft stufenlos variierbar ist. Der Anpressdruck kann insbesondere durch einen einfach oder doppelt wirkenden Hydraulikzylinder eingestellt werden, der durch ein von einer Steuereinrichtung betätigtes Ventil mit unter Druck stehender Hydraulikflüssigkeit beaufschlagt wird.

In einer weiteren Ausgestaltung der Erfindung entspricht die Länge der Koppelglieder dem Abstand zwischen den Drehpunkten der oberen und der unteren Einzugswalze in deren maximal ausgelenkten Zustand, so dass die Progression des Anpressdrucks mit zunehmenden Erntegutdurchsatz besonders erheblich ist.

In der Praxis umfasst die Einzugsvorrichtung in der Regel zwei obere höhenbewegliche Einzugswalzen, denen wenigstens zwei starr am Rahmen der Einzugsvorrichtung gelagerte untere Einzugswalzen gegenüberliegen und wobei die oberen Einzugswalzen an einer in einem Drehpunkt der Einzugsvorrichtung drehfest gelagerten gemeinsamen Schwinge angeordnet sind und mit zumindest einem Koppelglied des Koppelelementes in Wirkverbindung stehen. Auf diese erhält man mit Auslenkung der oberen Einzugswalzen ein Hebelverhältnis wodurch auf konstruktiv einfache Weise eine erhebliche Progression der Anpresskraft bewirkbar ist.

In weiterer vorteilhafter Ausgestaltung der Erfindung sind das fremdkraftbetätigte Druckelement und das Federelement und das Koppelelement hintereinander angeordnet und erstrecken sich annähernd horizontal, vorzugsweise seitlich innerhalb der Einzugsvorrichtung, so dass eine bauraumsparende Anordnung innerhalb der Einzugsvorrichtung ermöglicht ist.

Dadurch, dass Federelement die mit dem Koppelelement in Wirkverbindung stehende obere Einzugswalze gegen die mit dem Koppelelement in Wirkerbindung stehende untere Einzugswalze vorspannt, kann auch bei geringem Erntegutdurchsatz ein ausreichender Anpressdruck, insbesondere zur Vermeindung von Überlangen des Erntegutes erreicht werden.

In einer weiteren Ausführungsform ist die Verstelleinrichtung mit einer Steuereinrichtung und einem Sensor zur Erfassung z.B. der Höhe der Erntegutmatte verbunden, um die Verstelleinrichtung derart zu steuern, dass mit steigendem Erntegutdurchsatz ein progressiv ansteigender Anpressdruck realisierbar. Der Durchgangsspalt zwischen den Einzugswalzen wird demnach mit steigender Höhe der Erntegutmatte vergrößert und mit sinkender Höhe der Erntegutmatte verringert. Vorzugsweise können editierbare Soll-Kennlinien in einer Auswerteeinrichtung wiederabrufbar hinterlegt werden, so dass angepasst an jeweilige Erntegutparameter, wie z.B. Erntegutart oder Erntegutfeuchte der erforderliche Anpressdruck eingestellt bzw. geregelt werden kann. Vorzugsweise erfolgt die Steuerung bzw. Regelung des Anpressdrucks automatisch mittels der Steuereinrichtung. Denkbar ist, dass der Bediener manuell über ein in der Fahrerkabine des Feldhäckslers Eingabe- und Bedienelement die Steuerung bzw. Regelung des Anpressdrucks der Einzugswalzen vornehmen kann, um so insbesondere in konkreten Erntesituationen in den Steuerungsprozess eingreifen kann.

Eine weitere Ausführung der Erfindung sieht vor, dass die erfindungsgemaße Verstelleinrichtung alleine von einer Hydraulikanordnung gebildet wird, die derart ansteuerbar ist, dass mit zunehmenden Abheben der oberen Einzugswalze von der unteren Einzugswalze ein progressiv ansteigender Anpressdruck erreicht wird.

Weitere vorteilhafte Ausgestaltungen sind Gegenstand weiterer Unteransprüche und werden nachfolgend anhand von einer Zeichnung näher erläutert.

Es zeigen:
- Figur 1:: einen Feldhäcksler mit einer Einzugsvorrichtung in schematisch dargestellter Seitenansicht
- Figur 2:: eine schematische seitliche Ansicht der Einzugsvorrichtung bei geringem Abstand der Einzugswalzen
- Figur 3:: ein schematische seitliche Ansicht der Einzugsvorrichtung bei maximalen Abstand der Einzugswalzen
- Figur 4:: eine schematische Seitenansicht der Einzugsvorrichtung mit zwei Koppelmechanisman
- Figur 5:: Darstellung des Zusammenhangs zwischen Anpresskraft und Spalteweite der Walzen anhand von Kennlinien

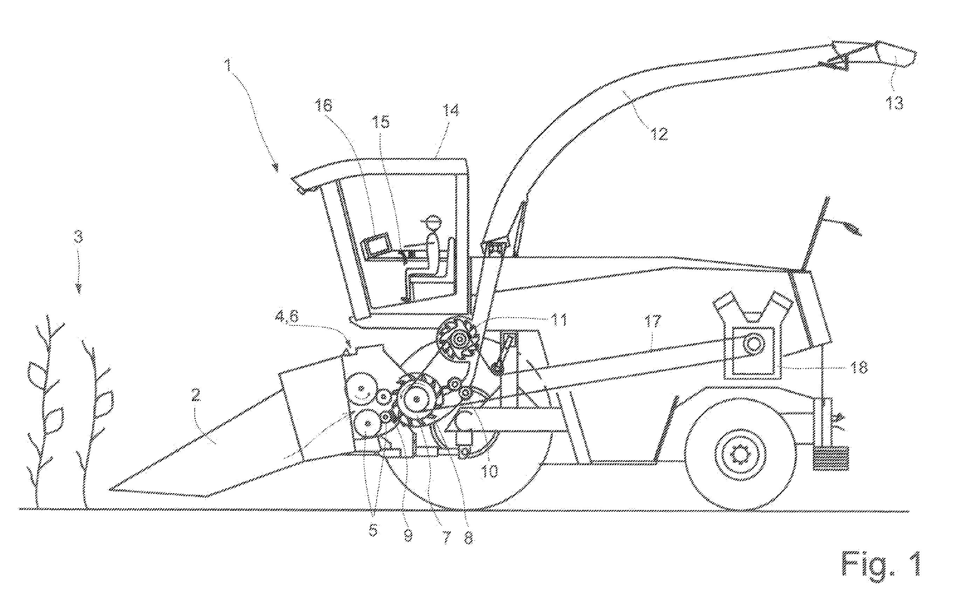

Figur 1 zeigt einen se!bstfahrenden Feldhäcksler 1 in Seitenansicht und Schnittdarstellung. Frontseitig in Fahrtrichtung FR gesehen ist dem Feldhäcksler 1ein Vorsatzgerät 2 zugeordnet, welches im Erntebetrieb des Feldhäckslers 1 das Erntegut 3 aufnimmt, gegebenenfalls zerkleinert und der nachfolgenden in einem Einzugsgehäuse 4 Einzugs- und Vorpresswalzen 5 aufnehmende Einzugsvorrichtung 6 zuführt. Die Einzugs- und Vorpresswalzen 5 leiten das Erntegut 3 der nachgeordneten und rotierenden Häckseltrommel 7 zu, deren umlaufenden Häckselmesser 7 das Erntegut 3 an einer Gegenschneide 8 zerkleinern. Das zerkleinerte Erntegut 3 wird sodann an eine Nachzerkleinerungseinrichtung 9 übergeben. Der Nachbeschleuniger 10 beschleunigt das zerkleinerte Erntegut 3 und fördert es über einen horizontal und vertikal verstellbaren Auswurfkrümmer 11 und eine diesem verschwenkbar zugeordnete Auswurfkrümmerklappe 12 zur Regelung der Wurfweite des Erntegutstrahls auf eine nicht abgebildete, dem Auswurfkrümmer 11 zugeordnete Transportvorrichtung. Die Bedienung des Feldhäckslers 1 erfolgt von der Fahrerkabine 14 aus, in welcher Bedienelemente 15 und eine Eingabe- und Anzeigeneinheit 16 vorhanden sind. Der Antrieb der beschriebenen Arbeitsorgane erfolgt über einen Antriebsriemen 17 der mit einem Antriebsmotor 18 verbunden ist.

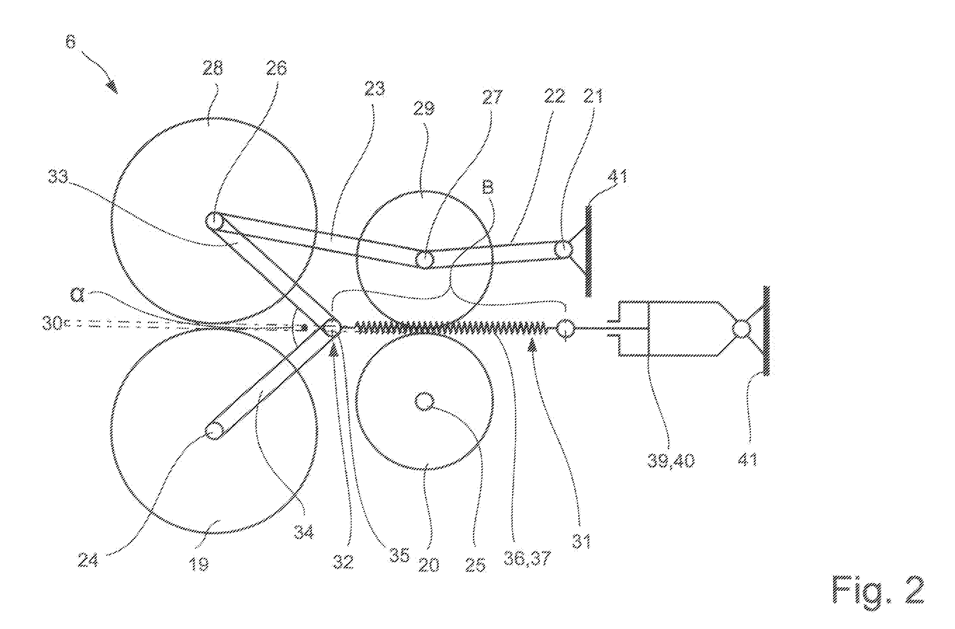

Fig. 2 zeigt eine schematische Darstellung der Einzugsvorrichtung 6. Die unteren im Durchmesser unterschiedlich ausgestalteten Einzugswalzen 19, 20 sind drehbar am abnehmbar befestigten hier nicht näher dargestellten Einzugsgehäuse fixiert. Im Erntebetrieb werden die unteren Einzugswalzen 19, 20 mittels eines an sich bekannten und hier nicht dargestellten Getriebes angetrieben. Im Drehpunkt 21 sind Schwingen 22, 23 parallel zu den Drehachsen 24, 25 der Einzugswalzen 19, 20 drehbar gelagert. Diese haben eine vordere Lagerstelle 26 und eine hintere Lagerstelle 27, in denen gleichzeitig die oberen Einzugswalzen 28, 29 drehbar gelagert sind. Der Antrieb der oberen Einzugwalzen 28, 29 erfolgt gleichermaßen über ein an sich bekanntes Getriebe in entgegengesetzter Drehrichtung zu den unteren Einzugswalzen 19, 20,

Um den erforderlichen Anpressdruck für die Vorpressung der durch den Walzenspalt 30 durchführenden Erntegutmatte erreichen zu können, der insbesondere mit zunehmender Höhe der Erntegutmatte ansteigen muss, um einen homogenen Gutfluss zu erreichen, ist der Einzugsvorrichtung 6 erfindungsgemäß eine Verstelleinrichtung 31 zugeordnet, die derart ausgebildet ist, dass der Anpressdruck auf den Erntegutstrom mit zunehmenden Abstand der oberen Einzugswalzen 28, 29 zu den unteren Einzugswalzen 19, 20 progressiv ansteigt.

Im Ausführungsbeispiel besteht die erfindungsgemäße Verstelleinrichtung 31 aus einem Koppelmechanismus 32. der zwei Koppelglieder 33, 34 umfasst, die mit einem Ende im Drehpunkt 35 gemeinsam drehbar gelagert sind. Das weitere Ende des einen Kopplegliedes 33 ist drehbar an der Drehachse 24 der oberen vorderen Einzugswalze 28 und das weitere Ende des zweiten Koppelgliedes 34 ist im Drehpunkt 24 der unteren vorderen Einzugswalze 19 drehbar gelagert. Die Länge der beiden Koppelglieder 33, 34 entspricht zusammen vorteilhaft dem Abstand der oberen und der unteren Einzugswalze 28, 19 von ihrem jeweiligen Lagerpunkt 26, 24 aus gesehen im Zustand maximaler Auslenkung. Im gemeinsamen Drehpunkt 35 der Koppelglieder 33, 34 greift in horizontaler Richtung ein als vorgespannte Zugfeder 36, ausgebildetes Federelement 37 an, das einen definierbaren Abstand B zwischen dem gemeinsamen Drehpunkt 35 der Koppelglieder 33, 34 und dem am gegenüberliegenden Ende im weiteren Drehpunkt 38 angreifenden fremdkraftbetätigten Druckelement 39 bildet. Das andere Ende des fremdkraftbetätigten Druckelementes 39 ist mit dem Rahmen des Einzugsgehäuses 41 angelenkt verbunden. Denkbar ist, dass die Verstelleinrichtung 31 an beiden Seiten des Einzugsgehäuses 41 angeordnet ist. Zudem ist vorstellbar, die Verstelleinrichtung 31 nur auf einer Seite des Einzugsgehäuses 41, anzuordnen, wobei die Schwingen 22, 23 auf beiden Seiten des Einzugsgehäuses 41 mittels einer nicht dargestellten Querverbindung untereinander verbunden sind. Das fremdkraftbetätigte Druckelement 39 ist vorliegend als ein über eine nicht näher dargestellte Steuereinrichtung steuerbarer Hydraulikzylinder 40 ausgebildet Die Nutzung eines elektrischen oder elektronischen Stellmotors ist möglich. Hier nicht näher dargestellt kann die Steuereinrichtung mit einem Sensor in Wirkverbindung stehen, der die Position der oberen Einzugswalzen 28, 29 zu den unteren Einzugswalzen 19, 20 erfasst, um in Abhängigkeit vom Abstand der Einzugswalzen 28, 29, 19, 29 den erforderlichen Anpressdruck steuern zu können.

Es liegt im Rahmen der Erfindung, dass die erfindungsgemäße Verstelleinrichtung allein von einer Hydraulikzylinderanordnung gebildet wird, die wenigstens einen Hydraulikzylinder umfasst, der an wenigstens eine der oberen Einzugswalzen 28, 29 angreift und derart über eine Steuereinrichtung angesteuert wird, dass mit zunehmenden Abstand der oberen Walzen 28, 29 von den unteren Walzen 19, 20 die Anpresskraft progressiv ansteigt. Denkbar ist zudem, dass nicht die wenigstens eine obere Walze 28, sondern die wenigstens eine untere Walze 19 (oder die wenigstens beiden Walzen 28, 19) zu bewegen. In einer weiteren hier nicht gezeigten Ausgestaltung der Erfindung kann es vorgesehen sein, dass der vorderen oberen Einzugswalze 28 und der vorderen hinteren Einzugswalze 29 jeweils eine separate Verstelleinrichtung zugeordnet ist.

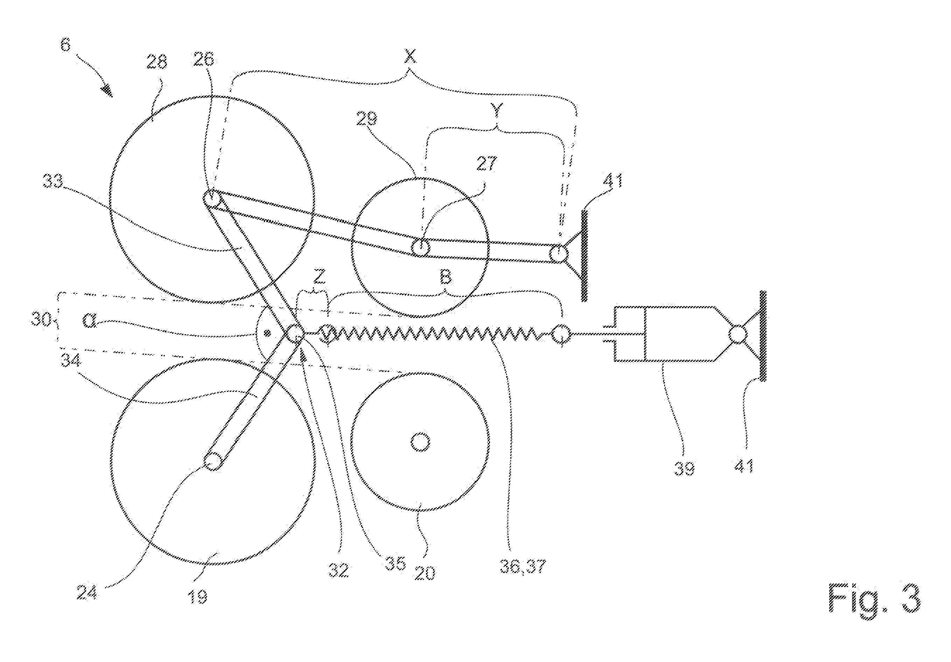

Zur Darstellung des Funktionsablaufs der Einzugsvorrichtung 6 im Erntebetrieb zeigt Figur 3 in Unterschied zu Figur 2 die Einzugswalzen 28, 29, 19, 20 mit einem vergrößerten Walzenspalt 30. Die Einzugsvorrichtung 6 ist derart ausgebildet, dass die oberen Einzugswalzen 28, 29 relativ zu den unteren Einzugswalzen 19, 20 bewegbar sind und über den Koppelmechanismus 32 durch die Kraft der Zugfeder 36 nach unten gegen die unteren Einzugswalzen 19, 20 vorgespannt werden. Durch Ein- und Ausfahren des nicht näher dargestellten Kolbens des Hydraulikzylinders 39 kann die Abstandslänge B der Zugfeder 36 und damit die Kraft der Zugfeder 36 verändert werden, wodurch wiederum eine Veränderung des Anpressdrucks der oberen Einzugswalzen 28, 29 herbeiführbar ist. In Figur 3 hat sich der Walzenspalt 30 vergrößert und die oberen Einzugswalzen 28, 29 befinden sich in einem angehobenen Zustand, bedingt durch einen erhöhten nicht näher gezeigten Erntegutdurchsatz. Entsprechend haben die Koppelglieder 33, 34 ihren Winkel α zueinander vergrößert, wobei andere Ausgestaltungen der Koppelglieder 33, 34 in ihrer Winkellage zueinander denkbar sind, Das Ausführungsbeispiel dient allein zur Prinzipdarstellung. Die Lage des Hydraulikzylinders 39 ist dabei unverändert. Durch das Anheben der oberen Einzugswalzen 28, 29 haben die Koppelglieder 33, 34 den Winkel α im gemeinsamen Drehpunkt 35 zueinander vergrößert. Dadurch bedingt, hat sich gleichzeitig die durch die Zugfeder 36 ergebende Abstandslänge B um den Abstandswert Z vergrößert. Dadurch, dass der Winkel α nun sehr stumpf geworden ist, nehmen die Kräfte (die Kraft gehorcht der Tangensfunktion), die über die Koppelglieder 33, 34 an den Drehpunkten 24, 26, 27 der oberen und der unteren Einzugswalzen 28, 29, 19, 20 mit zunehmender Abstandsveränderung einwirken, progressiv ansteigend zu, so dass vorteilhaft mit zunehmender Erntegutmattenhöhe ein verstärkter Anpressdruck erreichbar ist. Im Weiteren führt der im Ausführungsbeispiel gewählte jeweilige Abstand X, Y der beiden Drehpunkte 26, 27 der oberen Einzugswalzen 28, 29 zum am Einzugsgehäuse 41 gelegenen Drehpunkt 21 der Schwingen 23, 22 zu einer gegenüber der Anpresskraft an der vorderen oberen Einzugswalze 28 verstärkten Anpresskraft der hinteren oberen Einzugswalze 29 auf die durch den Walzenspalt 30 durchzuführende Emtegutmatte.

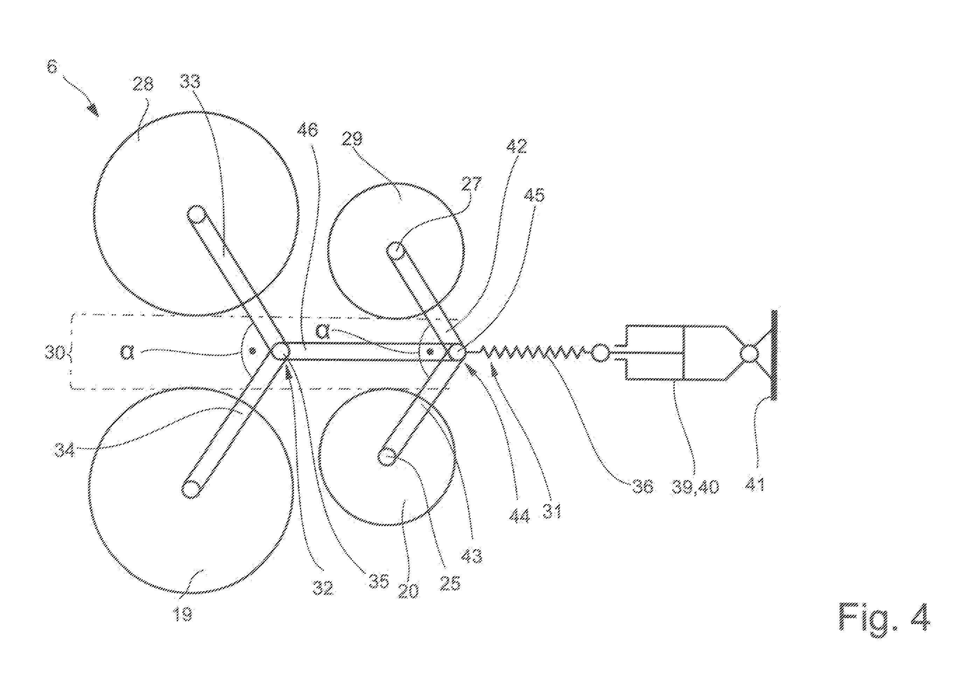

Eine weitere Ausgestaltung der Erfindung zeigt Figur 4. Dabei ist Verstelleinrichtung 31 derart ausgestaltet sein, dass zwischen dem in Figur 2 dargestellten Koppelmechanisimus 32 und der Zugfeder 36 ein weiterer zwei Koppelglieder 42, 43 aufweisender Koppelmechanismus 44 angeordnet ist, wobei die einen Enden der Koppelglieder 42, 43 gemeinsam im Drehpunkt 45 mit der Zugfeder 36 gelagert sind und das andere Endes des einen Koppelgliedes 42 im Drehpunkt 27 der oberen hinteren Einzugswalze 29 und das Ende des anderen Koppelgliedes 44 im Drehpunkt 25 der unteren hinteren Einzugswalze 20 gelagert ist, wobei die Koppelmechanismen 32, 44 über eine Koppelstange 46, die jeweils in den gemeinsamen Drehpunkten 35, 45 der Koppelglieder 33, 34, 43, 42 fixiert ist, miteinander verbunden sind. Im dargestellten Ausführungsbeispiel ist der Walzenspalt erhöht, so dass durch die Veränderung des Winkels α der jeweils miteinander verbundenen Koppelglieder 34, 33 an denen die Federkraft der Zugfeder 36 angreift, die Federkraft der Zugfeder 36 in Richtung stumpfer Winkel progressiv ansteigt, so dass gleichermaßen die Anpresskraft der oberen Einzugswalzen 28, 29 mit zunehmender Erntegutmattenhöhe progressiv ansteigt.

Hier nicht näher dargestellt können Abhängigkeiten zwischen Enitegutparametern und Erntegutmattenhöhe und ein erforderlicher mit zunehmender Erntegutmattenhöhe progressiv ansteigender Anpressdruck als Kennlinie wiederabrufbar in einer Auswerteeinheit hinterlegt werden. Denkbar ist, dass mittels einer hier nicht näher dargestellten Eingabe- und Bedieneinrichtung die erforderlichen Parameter, wie die Erntegutart und die Erntegutfeuchte zur Berechnung eines Sollwertes des Anpressdrucks als Funktion der Erntegutmattenhöhe eingegeben werden. Mittels einer Steuereinrichtung können die erforderlichen Parameter auch über an sich bekannte hier nicht näher dargestellte Sensoren erfasst werden. Zur Vermeidung von zu hohen Anpressdrücken kann einerseits ein maximaler Anpressdruck als Wert in der Steuereinrichtung definiert werden, wie auch die jeweiligen Progressionsschritte des Anpressdrucks.

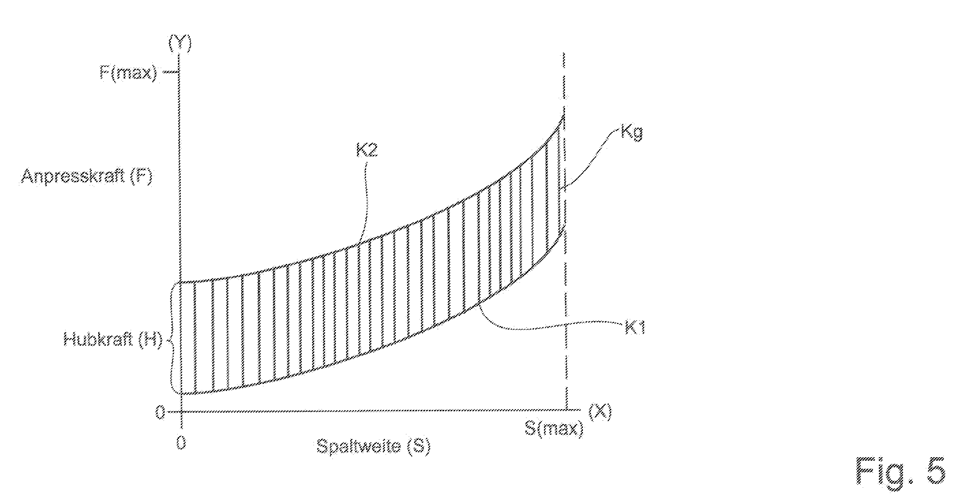

Figur 5 zeigt den Zusammenhang zwischen der Anpresskraft der Walzen, bewirkt durch die erfindungsgemäße Verstelleinrichtung und dem Walzenabstand. Ein Kennlinienfeld K_{f}, begrenzt nach unten durch eine untere Kennlinie K1 und nach oben durch eine obere Kennlinie K1 zeigt den Verlauf der Anpresskraft F, der mit zunehmender Spaltweite S progressiv ansteigt, wobei durch die variable Hubkraft H des fremdkraftbetätigten Druckelementes, die Vorspannkraft des Federelementes und somit die Lage der Kennlinie der Anpresskraft im Kennlinienfeld K_{f}, im Bereich zwischen der Kennlinie K1 und K2 verschoben werden kann. Wie bereits in der Beschreibung zu den Figuren 2-4 dargestellt, wird die Progression der Anpresskraft der bewegbaren Walzen dadurch erreicht, dass die Verstelleinrichtung zusätzlich zum fremdkraftbetätigten Druckelement und dem Federelement einen Koppelmechanismus umfasst, wobei die alleinige Nutzung eines Hydraulikzylinders oder eines elektrischen oder elektronischen Stellmotors zur Erreichung des progressiv ansteigenden Anpressdrucks im Rahmen der Erfindung liegt.

Es liegt im Rahmen des Könnens des Fachmanns die beschriebene Einzugsvorrichtung in nicht dargestellter Weise abzuwandeln, um die beschriebenen Effekte abzuwandeln, ohne den Rahmen der Erfindung zu verlassen.

### Bezugszeichenliste:

- 1: Selbstfahrender Feldhäcksler
- 2: Vorsatzgerät
- 3: Erntegut
- 4: Einzugsgehäuse
- 5: Einzugs- und Vorpresswalzen
- 6: Einzugsvorrichtung
- 7: Häckseltrommel
- 8: Häckselmesser
- 9: Gegenschneide
- 10: Nachzerkleinerungseinrichtung
- 11: Nachbeschleuniger
- 12: Auswurfkrümmer
- 13: Aüswurfkrümmerklappe
- 14: Fahrerkabine
- 15: Bedienelement
- 16: Eingabe- und Anzeigeeinheit
- 17: Antriebsriemen
- 18: Antriebsmotor
- 19: Untere Einzugswalze
- 20: Untere Einzugswalze
- 21: Drehpunkt
- 22: Schwinge
- 23: Schwinge
- 24: Drehachse
- 25: Drehachse
- 26: Lagerstelle
- 27: Lagerstelle
- 28: Obere Einzugswalzen
- 29: Obere Einzugswalzen
- 30: Walzenspalt
- 31: Verstelleinrichtung
- 32: Koppelmechanismus
- 33: Koppelglied
- 34: Koppelglied
- 35: Drehpunkt
- 36: Zugfeder
- 37: Federelement
- 38: Drehpunkt
- 39: Druckelement
- 40: Hydraulikzylinder
- 41: Einzugsgehäuse
- 42: Koppelglied
- 43: Koppelglied
- 44: Koppelmechanismus
- 45: Drehpunkt
- 46: Koppelstange

- FR: Fahrtrichtung
- B: Abstandslänge
- Z: Abstand
- a: Winkel
- Y: Abstand
- X: Abstandswert
- K1: Untere Kennlinie
- K2: Obere Kennlinie
- K_{f}: Kennlinienfeld
- H: Hubkraft
- F: Anpresskraft
- S: Spaltweite

## Patentansprüche

1. Einzugsvorrichtung für einen Feldhäcksler mit wenigstens einer unteren drehbaren Einzugswalze und wenigstens einer oberen drehbaren Einzugswalze zwischen denen ein Erntegutstrom hindurchführbar ist und die wenigstens eine obere Einzugswalze im Betrieb mittels wenigstens einer Verstelleinrichtung nach unten in Richtung auf die wenigstens eine untere Einzugswalze gedrückt wird,
**dadurch gekennzeichnet, dass**
die wenigstens eine Verstelleinrichtung (31) derart ausgebildet ist, dass der Anpressdruck auf den Erntegutstrom mit zunehmenden Abstand der wenigstens einen oberen Einzugswalze (28, 29) zur wenigstens einen unteren Einzugswalze (33, 34) progressiv ansteigt.

2. Einzugsvorrichtung nach Anspruch 1,
**dadurch gekennzeichnet, dass**
die wenigstens eine Verstelleinrichtung (31) ein fremdkraftbetätigtes Druckelement (39) umfasst, das einen Endes an der Einzugsvorrichtung (6) drehbar gelagert ist und anderen Endes ein Federelement (37) aufnimmt, das am gegenüberliegenden Ende ein mit den Einzugswalzen (28, 34) in Wirkverbindung stehenden Koppelmechanismus (32) aufnimmt.

3. Einzugsvorrichtung nach Anspruch 1 oder 2,
**dadurch gekennzeichnet, dass**
das Federelement (37) eine Zugfeder (36) ist.

4. Einzugsvorrichtung nach wenigstens einem der vorhergehenden Ansprüche,
**dadurch gekennzeichnet, dass**
das wenigstens eine fremdkraftbetätigte Druckelement (39) ein Hydraulikzylinder (40) und/oder ein elektrischer oder elektronischer Stellantrieb ist.

5. Einzugsvorrichtung nach wenigstens einem der vorhergehenden Ansprüche,
**dadurch gekennzeichnet, dass**
der Koppelmechanismus (32) zumindest zwei Koppelglieder (33, 34) umfasst, deren erste Enden jeweils in einem Drehpunkt (35) mit dem Federelement (37) drehbar gelagert verbunden sind und das zweite Ende des ersten Koppelgliedes (33) am Drehpunkt (26) der oberen Einzugswalze (28) und das zweite Ende des zweiten Koppelgliedes (34) am Drehpunkt (24) der unteren Einzugswalze (19) drehbar gelagert ist.

6. Einzugsvorrichtung nach wenigstens einem der vorhergehenden Ansprüche,
**dadurch gekennzeichnet, dass**
die Länge der Koppelglieder (33, 34) dem Abstand zwischen den Drehpunkten (26, 24) der oberen und der unteren Einzugswalze (28, 19) im maximal ausgelenkten Zustand entspricht.

7. Einzugsvorrichtung nach wenigstens einem der vorhergehenden Ansprüche,
**dadurch gekennzeichnet, dass**
die Einzugsvorrichtung (6) zwei obere Einzugswalzen (28, 29) umfasst, die an einer in einem Drehpunkt (21) drehfest gelagerten gemeinsamen Schwinge (22, 23) angeordnet sind, die mit zumindest einem Koppelglied (33) in Wirkverbindung steht.

8. Einzugsvorrichtung nach wenigstens einem der vorhergehenden Ansprüche,
**dadurch gekennzeichnet, dass**
das fremdkraftbetätigte Druckelement (39) und das Federelement (37) hintereinander angeordnet sind und sich wenigstens annähernd horizontal erstrecken.

9. Einzugsvorrichtung nach wenigstens einem der vorhergehenden Ansprüche,
**dadurch gekennzeichnet, dass**
das Federelement (37) die mit dem Koppelmechanismus (32) in Wirkverbindung stehende obere Einzugswalze (28) gegen die mit dem Koppelelement (34) in Wirkverbindung stehende untere Einzugswalze (19) vorspannt.

10. Einzugsvorrichtung nach wenigstens einem der vorhergehenden Ansprüche,
**gekennzeichnet,**
**durch** eine mit der wenigstens einen Verstelleinrichtung (31) in Verbindung stehende Steuereinrichtung, die eingerichtet ist, den Anpressdruck der Einzugswalzen mit zunehmender Erntegutmattenhöhe progressiv ansteigend zu steuern

11. Einzugsvorrichtung nach wenigstens einem der vorhergehenden Ansprüche,
**dadurch gekennzeichnet, dass**
die Steuereinrichtung mit einem Sensor zur Erfassung des Einzugswalzenabstandes und/oder Erntegutdurchsatzsensors in Wirkverbindung steht und eingerichtet ist, die Verstelleinrichtung (31) abhängig von dem Sensorsignal derart zu steuern, dass der Anpressdruck der (28, 29) Einzugswalzen mit wachsender Erntegutmattenhöhe progressiv ansteigt.

12. Einzugsvorrichtung nach wenigstens einem der vorhergehenden Ansprüche,
**dadurch gekennzeichnet, dass**
der aufzubringende mit zunehmender Erntegutmatetnhöhe progressiv ansteigende Anpressdruck in Form einer editierbaren Soll-Kennlinie in einer Auswerteeinrichtung wiederabrufbar hinterlegbar ist,

13. Einzugsvorrichtung nach wenigstens einem der vorhergehenden Ansprüche,
**dadurch gekennzeichnet, dass**
die Steuerung des Anpressdrucks automatisch mittels der Steuereinrichtung und/oder manuell vom Bediener mittels in einer Fahrerkabine (14) vorhandener Bedienelemente (15) erfolgt.

14. Einzugsvorrichtung nach wenigstens einem der vorhergehenden Ansprüche,
**dadurch gekennzeichnet, dass**
die Verstelleinrichtung (31) von wenigstens einer Hydraulikzylinderanordnung gebildet wird,

15. Feldhäcksler mit einer Einzugsvorrichtung nach einem der Ansprüche 1-13.
